(19) Europäisches Patentamt
European Patent Office
Office européen des brevets

(11) Veröffentlichungsnummer: **0 023 667**
**B1**

(12) # EUROPÄISCHE PATENTSCHRIFT

(45) Veröffentlichungstag der Patentschrift: **12.03.86**

(51) Int. Cl.[4]: **C 08 L 77/00** // (C08L77/00, 75:04)

(21) Anmeldenummer: **80104325.8**

(22) Anmeldetag: **23.07.80**

(54) **Polyamid-Formmassen mit verbesserter Zähigkeit.**

(30) Priorität: **04.08.79 DE 2931689**

(43) Veröffentlichungstag der Anmeldung: **11.02.81 Patentblatt 81/6**

(45) Bekanntmachung des Hinweises auf die Patenterteilung: **12.03.86 Patentblatt 86/11**

(84) Benannte Vertragsstaaten: **DE FR GB IT NL**

(56) Entgegenhaltungen:
**FR - A - 2 207 955**
**US - A - 4 141 879**

**CHEMICAL ABSTRACTS, Band 84, Nr. 8, 1976, Seite 56, Nr. 45410j Columbus, Ohio, U.S.A.**
**CHEMICAL ABSTRACTS, Band 81, Nr. 14, 1974, Seite 43, Nr. 78807k Columbus, Ohio, U.S.A.**
**CHEMICAL ABSTRACTS, Band 78, Nr. 18, 7. Mai 1973, Seite 64, Nr. 112627b Columbus, Ohio, U.S.A.**
**CHEMICAL ABSTRACTS, Band 78, Nr. 10, 12. März 1973, Seite 31, Nr. 59240s Columbus, Ohio, U.S.A.**
**CHEMICAL ABSTRACTS, Band 85, Nr. 6, 9. August 1976, Seite 43, Nr. 33995m Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Sanderson, John R., Dr. Jefferson Chemical Co., POB 4128 North Austin Station, Austin Texas 78765 (US)**
Erfinder: **Neuray, Dieter, Dr., Buschstrasse 149, D-4150 Krefeld (DE)**
Erfinder: **Michael, Dietrich, Dr., Deswatinesstrasse 57m, D-4150 Krefeld (DE)**
Erfinder: **Bonten, Heinrich, An der Heimstätte 23, D-4150 Krefeld (DE)**

**EP 0 023 667 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft verstärkte und gegebenenfalls gefüllte thermoplastische Formmassen aus Polyamiden und Polyurethanen, aus denen Formteile mit verbesserten physikalischen Eigenschaften hergestellt werden können.

Polyamide, insbesondere Polyamid-6, und Polyamid-6,6, haben aufgrund ihrer hohen Zähigkeit, verbunden mit hervorragender Chemikalienbeständigkeit und ausgezeichneter Ermüdungs- und Verschleissfestigkeit, als Konstruktionswerkstoffe grosse technische Bedeutung erlangt. Für viele Anwendungen reicht jedoch die Festigkeit und Steifigkeit der unverstärkten Polyamide nicht aus. Durch Ausrüstung der Polyamide mit Füll- oder Verstärkungsstoffen werden diese Nachteile weitgehend überwunden. Glasfaser-verstärkte Polyamide besitzen beispielsweise eine hohe Zug- und Biegefestigkeit, Steifigkeit und Härte. Darüber hinaus zeigen glasfaserverstärkte Polyamide eine verbesserte Masshaltigkeit und Dimensionsstabilität sowie erhöhte Wärmeformbeständigkeit. Diese Eigenschaftsvorteile müssen jedoch mit einem starken Abfall der Zähigkeit und der Dehnbarkeit erkauft werden. Ein Nachteil glasfaserverstärkter Polyamide gegenüber unverstärkten Polyamiden ist die verringerte Schlagzähigkeit bei mehrachsiger Beanspruchung. Ausserdem zeigen glasfaserverstärkte Polyamide, die mit bestimmten Pigmenten eingefärbt sind, im allgemeinen eine deutliche Verschlechterung der Schlagzähigkeit gegenüber ungefärbten verstärkten Produkten.

Die in der Praxis verwendeten Haftvermittler, wie beispielsweise Trimethoxyaminopropylsilan (Formel I),

$$NH_2-(CH_2)_3-Si-(O-CH_3)_3 \qquad I$$

und Schlichten, die eine bessere Haftung zwischen Glasfaser und Polymermatrix sowie eine gute Einarbeitung der Glasfaser gewährleisten sollen, verbessern etwas die Schlagzähigkeit der verstärkten Polyamide.

Es ist auch bekannt (DT-OS 2 744 593) durch Zumengung von 0,01 bis 0,05 Gew.-%, bezogen auf die Gesamtmasse, eines Polyimid-Vorpolymeren die mechanischen Eigenschaften eines verstärkten thermoplastischen Polymeren zu verbessern.

Die Schlagzähigkeit glasfaserverstärkter Polyamide wird jedoch durch die in der DT-OS 2 744 593 beschriebene Massnahme nicht verbessert.

Der Zusatz von niedermolekularen Weichmachern kann die Zähigkeit von unverstärkten Polyamiden verbessern. Bei verstärkten Polyamiden bewirken solche Weichmacher eine verringerte Steifigkeit. Weichmacher können auch die Haftung zwischen Füllstoffoberfläche und Polymermatrix stören, so dass die Zähigkeit und Zugfestigkeit stark herabgesetzt wird.

Ein anderer Vorschlag zur Verbesserung der Zähigkeit glasfaserverstärkter Polyamid-Formmassen besteht gemäss der DT-OS 2 541 799 darin, dass man Polyharnstoffe in Mengen von 0,1 bis 5 Gew.-% zusetzt. Durch diese Massnahme wird die Schädigungsarbeit nach DIN 53 443 angehoben. Misst man dagegen die Schädigungsarbeit nach der nachfolgend angegebenen Methode, bei der die mehraxiale Beanspruchung von Formteilen untersucht wird, so findet man aber, dass durch den Zusatz von Polyharnstoffen zu glasfaser-verstärkten Polyamiden die Schädigungsarbeit nur unwesentlich verbessert wird.

Aus dem Stand der Technik, insbesondere dem US-A 4 141 879 und aus «Chemical Abstracts», 84, 45 410 war ausserdem bekannt, Polyamide mit Polyurethanen zu modifizieren, wobei mit den in erheblichen Mengen zugesetzten Polyurethanen Formmassen mit solchen mechanischen Eigenschaften erhalten werden, wie sie auf Grund der Verteilung ohnehin zu erwarten waren. Ausserdem ist – ähnlich wie gemäss der Lehre in Chemical Abstracts 78, 59 240, wo unverstärkte Formmassen beschrieben werden – die Anwesenheit von Isocyanatgruppen enthaltenden Verbindungen zwingend vorgeschrieben.

Nach der Offenbarung in FR-A 22 079 55 werden unverstärkte Polyamide mit mindestens 20% Polyurethanen modifiziert, um deren Eignung zur Schischuhherstellung zu verbessern.

Ziel der vorliegenden Erfindung war es aber, das Arbeitsaufnahmevermögen bis zum Bruch von verstärkten Polyamind-Formmassen zu verbessern.

Diese Aufgabe wird gemäss vorliegender Erfindung überraschenderweise dadurch gelöst, dass man den faserverstärkten Polyamiden Polyurethane in Mengen von 0,5 bis 5 Gew.-%, bezogen auf die Gesamtmasse, beimengt.

Gegenstand der vorliegenden Erfindung sind daher faserverstärkte gegebenenfalls gefüllte, gegebenenfalls gefärbte Polyamidformmassen, die dadurch gekennzeichnet sind, dass sie 0,5–5 Gew.%, bezogen auf die Gesamtmasse, thermoplastische Polyurethane, die unter Einhaltung eines NCO/OH-Verhältnisses von 0,95–1,2:1 hergestellt worden sind, enthalten.

Die erfindungsgemäss verwendeten Polyurethane können nach bekannten Verfahren hergestellt werden, wie dies beispielsweise in Houben-Weyl, Band 14/2, S. 57–98 beschrieben ist, z.B.

a) aus aliphatischen oder aromatischen Polyisocyanaten, vorzugsweise in Gegenwart von indifferenten organischen Lösungsmitteln wie z.B. Toluol oder Chlorbenzol und Polyolen,

b) aus Bischlorkohlensäureestern aliphatischer Diole, durch Kondensation mit aliphatischen oder aromatischen primären oder sekundären Diaminen.

Zur Herstellung der Polyurethane werden eingesetzt:

1. Als Ausgangskomponente aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n \quad ,$$

in der
n = 2–4, vorzugsweise 2,
und
Q einen aliphatischen Kohlenwasserstoffrest mit 2–18, vorzugsweise 6–10 C-Atomen,
einen cycloaliphatischen Kohlenwasserstoffrest mit 4–15, vorzugsweise 5–10 C-Atomen,
einen aromatischen Kohlenwasserstoffrest mit 6–15, vorzugsweise 6–13 C-Atomen,
oder einen araliphatischen Kohlenwasserstoffrest mit 8–15, vorzugsweise 8–13 C-Atomen,
bedeuten, z.B.
Äthylen-diisocyanat,
1,4-Tetramethylen-diisocyanat,
1,6-Hexamethylendiisocyanat,
1,12-Dodecandiisocyanat,
Cyclobutan-1,3-diisocyanat,
Cyclohexan-1,3- und -1,4-diisocyanat
sowie beliebige Gemische dieser Isomeren,
1-Isocyanato-3,3,5-trimethyl-5-isocyanatomethyl-cyclohexan
(DE-Auslegeschrift 1 202 785, US-Patentschrift 3 401 190), 2,4- und 2,6-Hexahydrotuluylendiisocyanat
sowie beliebige Gemische dieser Isomeren,
Hexahydro-1,3- und/oder -1,4-phenylendiisocyanat,
Perhydro-2,4'- und/oder -4,4'-diphenylmethan-diisocyanat,
1,3- und 1,4-Phenylendiisocyanat,
2,4- und 2,6-Toluylendiisocyanat
sowie beliebige Gemische dieser Isomeren,
Diphenylmethan-2,4'- und/oder -4,4'-diisocyanat,
Naphthylen-1,5-diisocyanat.

Ferner kommen beispielsweise in Frage:
Tri-phenylmethan-4,4',4''-triisocyanat,
Polyphenyl-polymethylen-polyisocyanate,
wie sie durch Anilin-Formaldehyd-Kondensation und anschliessende Phosgenierung erhalten und z.B. in den GB-Patentschriften 874 430 und 848 671 beschrieben werden, Norbornan-Diisocyanate gemäss US-Patentschrift 3 492 350, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biueretgruppen aufweisenden Polyisocyanate («modifizierte Polyisocyanate»), insbesondere solche modifizierten Polyisocyanate, die sich vom
2,4- und/oder 2,6Toluylendiiso-cyanat
bzw. vom
4,4'- und/oder 2,4'-Diphenylmethandiisocyanat
oder Hexamethylendiisocyanat ableiten.

Weiter werden als Ausgangskomponenten Verbindungen mit mindestens zwei gegenüber Isocyanaten reaktionsfähigen Wasserstoffatomen und einem Molekulargewicht von 32 bis 400 verwendet. Hierunter versteht man Hydroxylgruppen und gegebenenfalls Aminogruppen und/oder Carboxylgruppen aufweisende Verbindungen, vorzugsweise Hydroxylgruppen aufweisende Verbindungen, die in der Polyurethanchemie üblicherweise als Kettenverlängerungsmittel oder Vernetzungsmittel dienen. Diese Verbindungen weisen in der Regel 2 bis 4, vorzugsweise 2, gegenüber Isocyanaten reaktionsfähige Wasserstoffatome auf.

Es können auch Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Ethylenglykol, Propandiol-(1,2) und (1,3),
Butandiol-(1,4) und -(2,3), Pentandiol-(1,5),
Hexandiol-(1,6), Octandiol-(1,8),
Neopentylglykol,
1,4-Bis-hydroxymethyl-cyclohexan,
2-Methyl-1,3-propandiol,
Dibrombutendiol (US-Patentschrift 3 723 392),
Glyzerin, Trimethylolpropan,
Hexantriol-(1,2,6), Trimethylolethan,
Pentaerythrit, Chinit, Mannit und Sorbit,
Ricinusöl, Diethylenglykol, Triethylenglykol,
Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere

Polybutylenglykole mit einem Molekulargewicht bis 400,
4,4'-Dihydroxy-diphenylpropan,
Di-hydroxymethyl-hydrochinon,
Ethanolamin, Diethanolamin,
N-Methyldiethanolamin, Triethanolamin
und 3-Aminopropanol.

Vorzugsweise werden Ethandiol-1,2, Butandiol-1,4 und Hexandiol-1,6 eingesetzt.

In Kombination mit den Polyolen können auch Polyamine, vorzugsweise Diamine mitverwendet werden.

Geeignete aliphatische Diamine sind beispielsweise
Ethylendiamin, 1,4-Tetramethylendiamin,
1,11-Undecamethylendiamin,
1,12-Dodecamethylendiamin
sowie deren Gemische,
1-Amino-3,3,5-trimethyl-5-amino-methylcyclohexan («Isophorondiamin»),
2,4- und 2,6-Hexahydrotoluylendiamin
sowie deren Gemische,
1-Amino-3,3,5-trimethyl-5-amino-methylcyclohexan («Isophorondiamin»),
2,4- und 2,6-Hexahydrotoluylendiamin
sowie deren Gemische,
Perhydro-2,4'- und 4,4'-diaminodiphenylmethan,
Bis-(3-aminopropyl)-methylamin,
Diamin-perhydro-anthrazine (DE-Offenlegungsschrift 2 638 731)
und cycloaliphatische Triamine gemäss DE-Offenlegungsschrift 2 614 244.

Als Beispiele für aromatische Diamine seien Bisanthranilsäureester gemäss den Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Ethergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte
2-Halogen-1,3-Phenylendiamine (DE-Offenlegungsschriften 2 001 772, 2 025 896 und 2 065 869),
3,3'-Dichlor-4,4'-diaminodiphenylmethan,
Toluylendiamin, 4,4'-Diaminodiphenylmethan,
4,4'-Diaminodiphenyldisulfide (DE-Offenlegungsschrift 2 404 976),
Diaminodiphenyldithioether (DE-Offenlegungsschrift 2 509 404),
durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäss DE-Offenlegungsschrift 2 734 574.

Als weitere geeignete niedermolekulare Polyole vom Molekulargewicht bis 400 kommen Esterdiole der allgemeinen Formeln

$$HO-(CH_2)_x-CO-O-(CH_2)_y-OH$$

und

$$HO-(CH_2)_x-O-CO-R-CO-O-(CH_2)_x-OH$$

in Frage,
in denen
R einen Alkylenrest mit 1–10, vorzugsweise 2-6, C-Atomen bzw. einen Cycloalkylen- oder Arylenrest mit 6–10 C-Atomen
$x = 2$–$6$ und
$y = 3$–$5$
bedeuten,
z.B.
δ-Hydroxybutyl-ε-hydroxy-capronsäureester,
ω-Hydroxyhexyl-γ-hydroxybuttersäureester,
Adipinsäure-bis-(β-hydroxyethyl)ester und
Terepthalsäure-bis(β-hydroxyethyl)ester;
Diolurethane der allgemeinen Formel

$$HO-(CH_2)_x-O-CO-NH-R'-NH-CO-O-(CH_2)_x-OH$$

in der
R' einen Alkylenrest mit 2–15, vorzugsweise 2–6, C-Atomen oder einen Cycloalkylen- oder Arylenrest mit 6–15 C-Atomen und
x eine Zahl zwischen 2 und 6
darstellen,
z.B.
1,6-Hexamethylen-bis-(β-hydroxyethylurethan)
oder 4,4'-Diphenylmethan-bis-(δ-hydroxybutylurethan),
sowie Diolharnstoffe der allgemeinen Formel

$$HO-(CH_2)_x-\underset{R'''}{\underset{|}{N}}-CO-NH-R''-NH-CO-\underset{R'''}{\underset{|}{N}}-(CH_2)_x-OH,$$

in der
R'' einen Alkylenrest mit 2–15, vorzugsweise 2–9 C-Atomen oder einen Cycloalkylen- oder Arylenrest mit 6–15 C-Atomen,
R''' Wasserstoff oder eine Methylengruppe und
x die Zahlen 2 und 3
bedeuten,
z.B. 4,4'-Diphenylmethan-bis-(β-hydroxyethylharnstoff)
oder die Verbindung

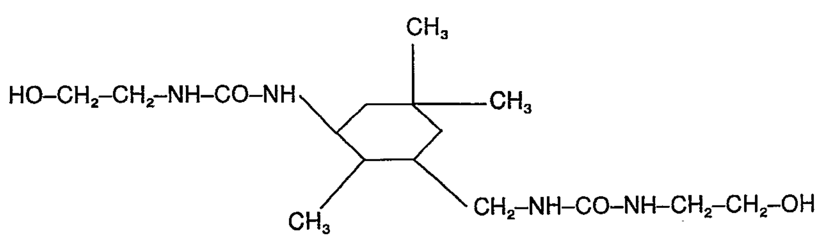

Die erfindungsgemäss verwendeten Polyurethane, insbesondere die Polyurethanharnstoffe weisen ein Verhältnis von Harnstoff- zu Urethangruppen von höchstens 1:1, vorzugsweise $\leq$ 0,5:1 auf.

Als Ausgangskomponenten sind ferner Verbindungen mit mindestens zwei gegenüber Isocyanaten reaktionsfähigen Wasserstoffatomen von einem Molekulargewicht in der Regel von 400–10 000 geeignet. Hierunter versteht man neben Aminogruppen oder Carboxylgruppen aufweisenden Verbindungen vorzugsweise Hydroxylgruppen aufweisende Verbindungen, insbesondere zwei bis 4 Hydroxylgruppen aufweisende Verbindungen, speziell solche vom Molekulargewicht 400 bis 10 000, vorzugsweise 1000 bis 3000, z.B. mindestens zwei, in der Regel 2 bis 4, vorzugsweise 2 Hydroxylgruppen aufweisende Polyester, Polyether, Polyacetale, Polycarbonate und Polyesteramide, wie sie für die Herstellung von homogenen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:
Bernsteinsäure, Adipinsäure, Korksäure,
Azelainsäure, Sebacinsäure, Phthalsäure,
Isophthalsäure, Trimellitsäure,
Phthalsäureanhydrid,
Tetrahydrophthalsäureanhydrid,
Hexahydrophthalsäureanhydrid,
Tetrachlorphthalsäureanhydrid,
Endomethylentetrahydrophthalsäureanhydrid,
Glutarsäureanhydrid, Maleinsäure,
Maleinsäureanhydrid, Fumarsäure,
dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B.
Ethylenglykol, Propandiol-(1,2) und (1,3),
Butandiol-(1,4) und -(2,3), Hexandiol-(1,6),
Octandiol-(1,8), Neopentylglykol,
1,4-Bis-Hydroxymethylcyclohexan,
2-Methyl-1,3-propandiol, Glycerin,
Trimethylolpropan, Hexantriol-(1,2,6),
Butantriol-(1,2,4), Trimethylolethan,
Pentaerythrit, Chinit, Mannit und Sorbit,
Formit, Methylglykosit, ferner
Diethylenglykol, Triethylenglykol,
Tetraethylenglykol und höhere Polyethylenglykole, Dipropylenglykol und höhere Polypropylenglykole sowie Dibutylenglykol und höhere Polybutylenglykole in Frage. Die Polyester können anteilig endständig Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Polyester aus Ethylenglykol und/oder Butandiol oder Hexandiol und Neopentylglykol und Adipinsäure sind besonders bevorzugt.

b) Auch die erfindungsgemäss in Frage kommenden, mindestens zwei, in der Regel zwei bis vier, vorzugsweise zwei, Hydroxylgruppen aufweisenten Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B.
Ethylenglykol, Propandiol-(1,3), oder -(1,2),
Trimethylolpropan, Glycerin, Sorbit,
4,4'-Dihydroxy-diphenylpropan, Anilin,
Ethanolamin oder Ethylendiamin
hergestellt. Vielfach sind solche Polyether bevorzugt, die überwiegend (bis zu 90 Gew.-%), bezogen auf alle vorhandenen OH-Gruppen im Polyether) primäre OH-Gruppen aufweisen. Auch OH-Gruppen aufweisende Polybutadiene sind erfindungsgemäss geeignet.

c) Als Polyacetale kommen z.B. die aus Glykolen, wie
Diethylenglykol, Triethylenglykol,
4,4'-Dioxethoxydiphenyldimethylmethan,
Hexandiol und Formaldehyd
herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

d) Als Hydroxylgruppen aufweisende Polycarbonate kommen solche der an sich bekannten Art in Betracht, die z.B. durch Umsetzung von Diolen wie
Propandiol-(1,3), Butandiol-(1,4) und/oder
Hexandiol-(1,6), Diethylenglykol,
Triethylenglykol, Tetraethylenglykol oder
Thiodiglykol mit Diarylcarbonaten, z.B.
Diphenylcarbonat, oder Phosgen
hergestellt werden können (DE-Auslegeschriften 1 694 080, 1 915 908 und 2 221 751; DE-Offenlegungsschrift 2 605 024).

e) Zu den Polyesteramiden zählen z.B. die aus mehrwertigen gesättigten oder ungesättigten Carbonsäuren bzw. deren Anhydriden und mehrwertigen gesättigten oder ungesättigten Aminoalkoholen gewonnenen, vorwiegend linearen Kondensate.

f) Auch bereits Urethan- oder Harnstoffgruppen enthaltende Polyhydroxylverbindungen sowie gegebenenfalls modifizierte natürliche Polyole, wie

Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z.B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Besonders bevorzugt werden Polyurethane auf Basis von

a) Polypropylendiol, Polyethandiolbutandioladipat, Polybutandioladipat, Butandiol und Diphenylmethan-4,4'-diisocyanat,

b) Polybutandioladipat, Butandiol und Diphenylmethan-4,4'-diisocyanat,

c) oder Polyhexandiol-neopentylglykoladipat, Hydrochinondihydroxyallylether und Diphenylmethan-4,4'-diisocyanat eingesetzt.

Bevorzugte Polyurethane im Sinne der Erfindung sind auch solche auf Basis von Hexamethylendiisocyanat und Ethandiol-1,2, Butandiol-1,4 und Hexandiol-1,6.

Die erfindungsgemäss einzusetzenden Polyurethane werden unter Einhaltung eines NCO/OH-Verhältnisses von 0,95 bis 1,2:1, vorzugsweise von 0,98 bis 1,1:1 hergestellt.

Als Polyamide können solche verwendet werden, die durch Polymerisation von cyclischen Lactamen, vorzugsweise mit wenigstens 7 Ringgliedern, wie ε-Caprolactam, oder durch Polykondensation von α,ω-Aminocarbonsäuren wie ε-Aminocapronsäure oder ω-Aminoundecansäure erhalten werden. Ferner sind Polyamide geeignet, die durch Polykondensation von Diaminen und Dicarbonsäuren erhalten werden, z.B. Polyamide aus Hexamethylendiamin und Adipin- oder Sebacinsäure. Ebenfalls geeignet sind Copolyamide aus z.B. Caprolactam oder ε-Aminocapronsäure, Adipinsäure und Hexamethylendiamin sowie Gemische wie z.B. solche aus Polyamid-6 und Polyamid-6,6. Polyamid-6 und/oder Polyamid-6,6 ist besonders bevorzugt.

Die relative Viskosität der verwendeten Polyamide, gemessen als 1%ige Lösung in m-Kresol bei 25°C, sollte im Bereich von 2,5 bis 5,0, vorzugsweise von 2,8 bis 4,5 liegen.

Die erfindungsgemässen Polyamid-Formmassen sind mit Fasern, vorzugsweise Glasfasern, die mit den handelsüblichen Haftvermittlern und Schlichten ausgerüstet sein können, in Mengen von 10 bis 60 Gew.-%, vorzugsweise 15 bis 50 Gew.% verstärkt. Die Fasern weisen vorzugsweise einen Durchmesser zwischen 8 und 14 µm auf und besitzen im Granulat im allgemeinen eine mittlere Faserlänge zwischen 0,1 und 0,5 mm.

Die erfindungsgemässen Formmassen können in Kombination mit den Fasern auch andere Füll- oder Verstärkungsstoffe enthalten, beispielsweise Glaskugeln, Asbest, Talkum, Kaolin, Wollastonit, Microvit, Glimmer oder Kreide. Die Mengen der in Kombination mit den Fasern verwendeten Füll- oder weiteren Verstärkungsstoffe betragen vorzugsweise 10–50 Gew.-%, bezogen auf die Fasermenge.

Die Einarbeitung der Polyurethane, erfolgt vorzugsweise zusammen mit der Glasfaser und/oder anderen Füll- und Verstärkungsstoffen auf z.B. üblichen Ein- und/oder Mehrwellenschneckenmaschinen nach bekannten Verfahren. Man kann aber auch das Polyurethan auf bereits gesondert hergestelltes verstärktes Polyamid-Granulat auftrudeln und die Einarbeitung der erfindungsgemässen Zuschlagstoffe in das verstärkte Polyamid bei der Verarbeitung zu einem Fertigteil vornehmen.

Die erfindungsgemässen Formmassen können darüber hinaus die üblichen Farbstoffe, Pigmente, Stabilisatoren, Nukleierungsmittel, Entformungshilfsmittel und Flammschutzmittel enthalten.

Die erfindungsgemässen Formmassen zeichnen sich durch eine deutlich verbesserte Arbeitsaufnahme ohne Beeinträchtigung der üblichen charakteristischen Polyamid-Eigenschaften aus. Sie sind hervorragend geeignet zur Herstellung von Formteilen, bei denen es auf eine hohe Schlagbeanspruchung ankommt, so beispielsweise für Gehäuse für Bohrmaschine, Stossstangen.

## Beispiele 1–10

Gemische aus Polycaprolactam, mit einer Viskosität, gemessen als 1%ige Lösung in m-Kresol bei 25°C von 3,1 und Polyurethan mit der in der Tabelle 1 genannten Zusammensetzung und die üblichen Mengen Nukleierungsmittel und Entformungsmittel, wurden auf einem Zweiwellenextruder bei 250–270°C aufgeschmolzen. Glasfasern in Form von «chopped strands» wurden in die Schmelze aus Polycaprolactam und Polyurethan so eingearbeitet, dass die durch eine Düse in Strangform ausgepresste Mischung ca. 30 Gew.-% Glasfasern enthielt. Die Stränge wurden in einem Wasserbad abgekühlt, granuliert und getrocknet. Das Granulat wurde auf einer Spritzgussmaschine zu Prüfkörpern verarbeitet. Die Spritzlinge wurden trocken in spritzfrischem Zustand geprüft.

Zur Beurteilung der mechanischen Eigenschaften wurde die Messung der Schädigungsarbeit in Anlehnung an DIN 53 443 durchgeführt.

Erfahrungsgemäss hängt die Schlagzähigkeit bei faserverstärkten Werkstoffen stark vom Orientierungsgrad der Fasern ab. Bei den nach dem

Spritzgiessverfahren hergestellten Prüfkörpern für den Schlagbiegeversuch nach DIN 53 453 sind die Glasfasern in einem hohen Mass in Fliessrichtung, d.h. parallel zur Länge des Prüfkörpers, orientiert. Die Schlagbeanspruchung erfolgt quer zur Fliessrichtung (quer zur Faserrichtung).

Hier liegt die Ursache dafür, dass mit steigendem Glasfasergehalt höhere Schlagzähigkeitswerte ($a_n$) gemessen werden. Längs zur Fliessrichtung (Faserrichtung) ist die Schlagzähigkeit aber deutlich niedriger.

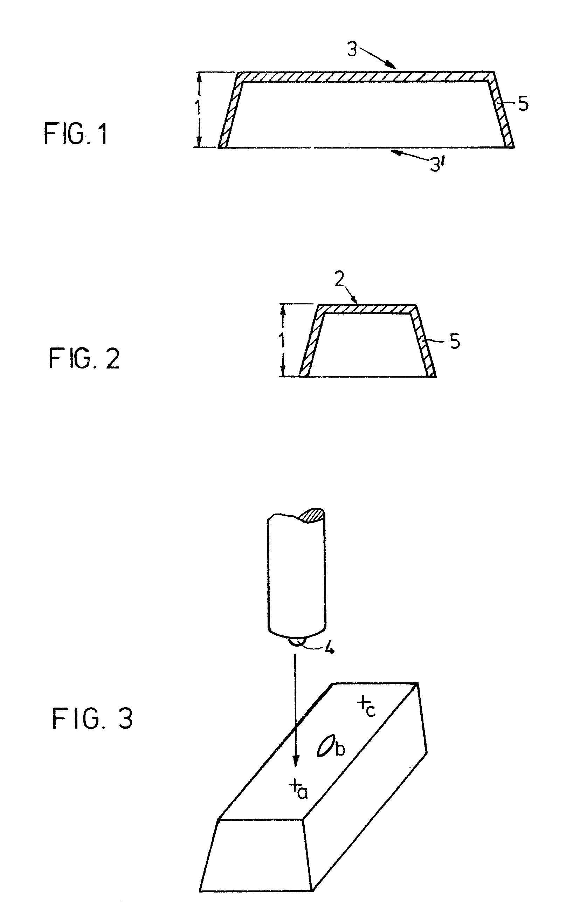

Ein besseres Bild von Zähigkeit der verstärkten Polyamide unter Schlagbeanspruchung liefert erfahrungsgemäss der Stoss- oder Fallbolzenversuch nach DIN 53 443, wie er in Figur 3 dargestellt ist. In dieser Figur hat die Kugel 4 einen Radius von 25 mm

a) bedeutet die Auftreffstelle der Kugel,
b) den Stangenguss (∅ ca. 4 mm) in der Mitte der Bodenfläche und
c) eine zu a) parallele Prüfstelle.

Voraussetzung ist allerdings, dass die Prüfkörper einen möglichst geringen Orientierungsgrad aufweisen, wie beispielsweise das in den Figuren 1 und 2 dargestellte Testkästchen, das eine Höhe 1 von 40 mm, eine Breite 2 von 46,7 mm und eine Länge 3 von 106,7 mm bzw. 3′ von 120 mm und eine Wanddicke 5 von 1,5 mm aufweist.

Tabelle 1

| Beispiel Nr. | 1 | 2 | 3 | 4 | 5 | 6 | 7 | 8 | 9 | 10 | Vergleichsbeispiel |
|---|---|---|---|---|---|---|---|---|---|---|---|
| Additiv, Typ | – | – | a | a | a | b | b | b | c | d | f |
| Gew.-% | – | – | 5 | 3 | 5 | 5 | 3 | 5 | 5 | 0,50 | 0,50 |
| Farbstoffe[e] | – | 0,5 | – | 0,5 | 0,5 | – | 0,5 | 0,5 | – | – | – |
| Physikalische Eigenschaften | | | | | | | | | | | |
| Schlagzähigkeit $a_n$ (kJ/m²)[g] | 59 | 50 | 62 | 56 | 54 | 60 | 55 | 57 | 54 | 60 | |
| Kerbschlagzähigkeit $a_k$ (kJ/m²)[g] | 12,5 | 11,1 | 17,8 | 16,2 | 12,6 | 19,3 | 16,0 | 16,3 | 14,9 | 11,9 | |
| Schädigungsarbeit W (N.m)[h] | 1,2 | 1,0 | 3,3 | 3,1 | 3,1 | 2,8 | 3,0 | 3,2 | 3,3 | 2,1 | 1,7 |

[a] = Polyurethan aus Propandiol-(1,2), Polyethandiol-butandiol-(1,4)-adipat, Polybutandiol-(1,4)-adipat, Butandiol-(1,4) und Diphenylmethan-4,4′-diisocyanat
[b] = Polyurethan aus Polybutandiol-(1,4)-adipat, Butandiol-(1,4) und Diphenylmethan-4,4′-diisocyanat
[c] = Polyurethan aus Polyhexandiol-(1,2)-neopentylglykol-adipat, Hydrochinondihydroxy-allylether und Diphenylmethan-4,4′-diisocyanat
[d] = Polyurethan aus Hexamethylendiisocyanat und Butandiol-1,4
[e] = Ultramarin- und Cadmium-Pigmente
[f] = Polyharnstoff aus Hexamethylendiamin und Hexamethylendiisocyanat
[g] = DIN 53 453
[h] = in Anlehnung an DIN 53 443 geprüft gemäss vorangegangener Textbeschreibung.

**Patentansprüche**

1. Faserverstärkte und gegebenenfalls gefüllte, gegebenenfalls gefärbte Polyamid-Formmassen, dadurch gekennzeichnet, dass sie 0,5 bis 5 Gew.-%, bezogen auf die Gesamtmenge, thermoplastische Polyurethane, die unter Einhaltung eines NCO/OH-Verhältnisses von 0,95–1,2:1 hergestellt worden sind, enthalten.

2. Polyamidformmassen nach Anspruch 1, dadurch gekennzeichnet, dass die Polyurethane ein Verhältnis Harnstoff- zu Urethangruppen von höchstens 1:1 aufweisen.

3. Polyamid-Formmassen nach Ansprüchen 1 und 2, dadurch gekennzeichnet, dass sie 10 bis 60 Gew.-% Fasern enthalten.

4. Polyamid-Formmassen nach Anspruch 3, dadurch gekennzeichnet, dass die Fasern Glasfasern sind.

5. Polyamid-Formmassen nach Ansprüchen 1–4, dadurch gekennzeichnet, dass sie 10 bis 50 Gew.-%, bezogen auf die Fasermenge, Füll- und/oder andere Verstärkungsstoffe enthalten.

6. Polyamid-Formmassen nach Ansprüchen 1–5, dadurch gekennzeichnet, dass als Polyamid Polyamid-6 oder Polyamid-6,6 verwendet wird.

**Claims**

1. Fibre-reinforced and optionally filled, optionally dyed polyamide moulding compositions, characterised in that they contain 0.5 to 5% by weight, based on the total quantity, of thermoplastic polyurethanes which have been produced while adhering to an NCO/OH ratio of 0.95–1.2:1.

2. Polyamide moulding compositions according to Claim 1, characterised in that the polyurethanes have a ratio of urea to urethane groups of at most 1:1.

3. Polyamide moulding compositions according to Claims 1 and 2, characterised in that they contain 10 to 60% by weight of fibres.

4. Polyamide moulding compositions according to Claim 3, characterised in that the fibres are glass fibres.

5. Polyamide moulding compositions according to Claims 1–4, characterised in that they contain 10 to 50% by weight, based on the quantity of fibres, of fillers and/or other reinforcing materials.

6. Polyamide moulding compositions according to Claims 1–5, characterised in that polyamide-6 or polyamide-6,6 is used as the polyamide.

**Revendications**

1. Mélanges à mouler à base de polyamide éventuellement colorés, renforcés par des fibres et contenant éventuellement une charge, caractérisés en ce qu'ils contiennent 0,5 à 5% en poids, par rapport à la quantité totale, de polyuréthannes thermoplastiques qui ont été préparés en maintenant un rapport NCO/OH de 0,95–1,2:1.

2. Mélanges à mouler à base de polyamide suivant la revendication 1, caractérisés en ce que les polyuréthannes présentent un rapport des groupes urée aux groupes uréthanne au maximum égal à 1:1.

3. Mélanges à mouler à base de polyamide suivant les revendications 1 et 2, caractérisés en ce qu'ils contiennent 10 à 60% en poids de fibres.

4. Mélanges à mouler à base de polyamide suivant la revendication 3, caractérisés en ce que les fibres sont des fibres de verre.

5. Mélanges à mouler à base de polyamide suivant les revendications 1 à 4, caractérisés en ce qu'ils contiennent 10 à 50% en poids, par rapport à la quantité de fibres, de charges et/ou d'autres matières de renforcement.

6. Mélanges à mouler à base de polyamide suivant les revendications 1 à 5, caractérisés en ce qu'on utilise comme polyamide le polyamide-6 ou le polyamide-6,6.

FIG. 1

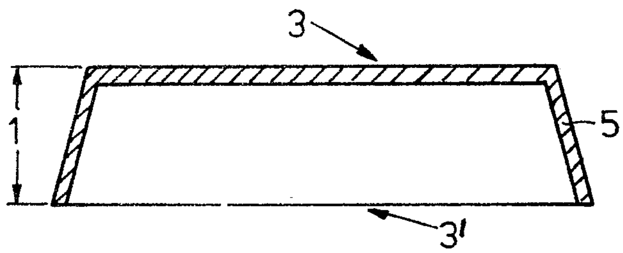


FIG. 2

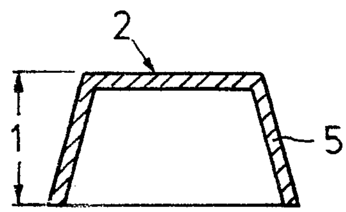


FIG. 3